# EUROPÄISCHE PATENTSCHRIFT

(11) **EP 0 678 053 B1**
(45) Veröffentlichungstag und Bekanntmachung des Hinweises auf die Patenterteilung: **24.07.1996**
(21) Anmeldenummer: 94904174.3
(22) Anmeldetag: 22.12.1993
(51) Int. Cl.: B01F 17/00, C09D 17/00

(54) **VERWENDUNG VON PARTIELL VERESTERTEN, CARBOXYLGRUPPEN ENTHALTENDEN COPOLYMERISATEN ALS DISPERGIERMITTEL UND WÄSSRIGE PIGMENTSUSPENSIONEN**
USE OF PARTIALLY ESTERIFIED COPOLYMERS CONTAINING CARBOXYL GROUPS AS DISPERSANTS, AND AQUEOUS PIGMENT SUSPENSIONS CONTAINING SUCH DISPERSANTS
UTILISATION DE COPOLYMERISATS PARTIELLEMENT ESTERIFIES CONTENANT DES GROUPES CARBOXYLE COMME DISPERSANTS, ET SUSPENSIONS AQUEUSES DE PIGMENTS

(30) Priorität: 07.01.1993 DE 4300239
(43) Veröffentlichungstag der Anmeldung: 25.10.1995
(73) Patentinhaber: BASF Aktiengesellschaft, 67063 Ludwigshafen (DE)
(72) Erfinder: KLINGELHOEFER, Paul, D-68161 Mannheim (DE); DENZINGER, Walter, D-67346 Speyer (DE); REYNOLDS, Mike, Grosselle, MI 48138 (US); HARTMANN, Heinrich, D-67117 Limburgerhof (DE)
(86) Internationale Anmeldenummer: EP9303656
(87) Internationale Veröffentlichungsnummer: WO9415706

(56) Entgegenhaltungen:
- EP-A- 0 367 049
- EP-A- 0 498 195
- EP-A- 0 542 033

## Beschreibung

Die Erfindung betrifft die Verwendung von partiell veresterten, Carboxylgruppen enthaltenden Copolymerisaten als Dispergiermittel zur Herstellung wäßriger Pigmentsuspensionen und wäßrige Pigmentsuspensionen, die die genannten Dispergiermittel enthalten.

Aus der EP-A-0 367 049 sind Flüssigwaschmittel bekannt, die 0,1 bis 20 Gew.-% partiell veresterte, Carboxylgruppen aufweisende Copolymerisate enthalten, die erhältlich sind durch Copolymerisieren von
(a) mindestens eines C₄- bis C₂₈-Olefins mit
(b) ethylenisch ungesättigten Dicarbonsäureanhydriden mit 4 bis 8 C-Atomen
   im Molverhältnis 1:0,5 bis 2 und anschließende partielle Veresterung der Copolymerisate mit Umsetzungsprodukten von
   (A) C₁- bis C₃₀-Alkoholen, C₈- bis C₂₂-Fettsäuren, C₁- bis C₁₂-Alkylphenolen oder sekundären C₂- bis C₃₀-Aminen mit
   (B) mindestens einem C₂- bis C₄-Alkylenoxyd oder Tetrahydrofuran im Molverhältnis (A):(B) von 1:2 bis 1:200 und Hydrolyse der Anhydridgruppen der Copolymerisate zu Carboxylgruppen, wobei die partielle Veresterung der Copolymerisate soweit geführt wird, daß mehr als 5 bis 50 % der Carboxylgruppen der Copolymerisate verestert sind.

Feststoffsuspensionen von Zement, Gips oder Anhydrit in Wasser enthalten üblicherweise zur Verflüssigung Dispergiermittel. Die wirksamsten Dispergiermittel für die in der Bauindustrie verwendeten wäßrigen Suspensionen von Zement, Anhydrit, Gips, Flugasche oder Kaolin sind Sulfonsäuregruppen tragende Melamin- und Naphthalin-Formaldehyd-Polykondensate, vgl. Die Angewandte Makromolekulare Chemie, 154, 145-159 (1987). Als Dispergiermittel für Zement eignen sich außerdem Ligninsulfonate oder Polycarboxylate.

Zum Dispergieren von keramischen Massen wie Tonen, Kaolinen, Feldspäten und Quarzgesteinen, verwendet man Soda und/oder Wasserglas als Dispergiermittel, vgl. Ullmanns Encyklopädie der technischen Chemie, Weinheim 1977, 4. Auflage, Band 13, Seite 715. Zum Dispergieren von Kaolin, Titandioxid oder Calciumcarbonat in Wasser verwendet man niedrigmolekulare Copolymerisate aus Acrylsäure und Maleinsäure oder niedrigmolekulare Polymerisate der Acrylsäure. Bei der Herstellung von keramischen Sanitärwaren geht man von einem Keramikschlicker aus, der entweder bei Drücken von 10 bar in Gipsformen oder in porösen Kunststofformen unter einem Druck von ca. 40 bar entwässert wird. Durch den Austritt des Wassers bildet sich jeweils der Scherben. Während beim Entwässern des Keramikschlickers in Gipsformen pro Tag nur etwa 2 Abgüsse möglich sind, beträgt die Entwässerungszeit des Keramikschlickers nach dem Hochdruckprozeß in einer porösen Kunststoffform nur etwa 10 Minuten.

Der vorliegenden Erfindung liegt die Aufgabe zugrunde, als Verflüssiger wirkende Dispergiermittel für Pigmentsuspensionen zur Verfügung zu stellen, die gegenüber den bekannten Dispergiermitteln eine verbesserte Wirksamkeit aufweisen.

Die Aufgabe wird erfindungsgemäß gelöst durch die Verwendung von partiell veresterten Copolymerisaten, die erhältlich sind durch Copolymerisation von
(a) mindestens einem C₄- bis C₂₈-Olefin oder Mischungen aus mindestens einem C₄- bis C₂₈-Olefin mit bis zu 20 Mol% C₁- bis C₂₈-Alkylvinylethern und
(b) ethylenisch ungesättigten Dicarbonsäureanhydriden mit 4 bis 8 C-Atomen
im Molverhältnis 1:0,5 bis 2 zu Copolymerisaten mit K-Werten von 6 bis 100, bestimmt nach H. Fikentscher in Tetrahydrofuran bei 25°C und einer Polymerkonzentration von 1 Gew.-%, und anschließende partielle Veresterung der Copolymerisate mit Umsetzungsprodukten von
(A) C₁- bis C₃₀-Alkoholen, C₈- bis C₂₂-Fettsäuren, C₁- bis C₁₂-Alkylphenolen, sekundären C₂- bis C₃₀-Aminen oder deren Mischungen mit
(B) mindestens einem C₂- bis C₄-Alkylenoxid oder Tetrahydrofuran
im Molverhältnis (A):(B) von 1:2 bis 1:200 und Hydrolyse der nicht umgesetzten Anhydridgruppen der Copolymerisate zu Carboxylgruppen, wobei die partielle Veresterung der Copolymerisate so weit geführt wird, daß 1 bis 50 % der Carboxylgruppen der Copolymerisate verestert sind, oder von Salzen dieser partiell veresterten Copolymerisate, als Dispergiermittel für wäßrige Pigmentsuspensionen.

Die erfindungsgemäß zu verwendenden partiell veresterten Copolymerisate werden in der zum Stand der Technik angegebenen EP-A-0 367 049 beschrieben. Sie werden beispielsweise dadurch hergestellt, daß man zunächst
(a) mindestens ein C₄- bis C₂₈-Olefin oder Mischungen aus mindestens einem C₄- bis C₂₈-Olefin mit bis zu 20 Mol% C₁- bis C₄-Alkylvinylethern und
(b) ethylenisch ungesättigten Dicarbonsäureanhydriden mit 4 bis 8 C-Atomen
im Molverhältnis 1:0,5 bis 2 copolymerisiert. Als Komponente (a) kommen beispielsweise Isobutylen, Octen, Decen, Dodecen, Tetradecen, Hexadecen, Heptadecen, Octadecen und Mischungen der genannten Olefine in Betracht. Von den genannten Olefinen kommen nicht nur die Olefine mit endständiger Doppelbindung in Betracht, sondern auch Isomere. Vorzugsweise setzt man als Komponente (a) verzweigte C₆- bis C₁₈-Olefine oder deren Gemische ein. Besonders bevorzugt ist die Verwendung von Mischungen aus 2,4,4'-Trimethylpenten-2 als Komponente (a) der Copolymerisate.

Die genannten isomeren Trimethylpentene können in jedem beliebigen Verhältnis bei der Copolymerisation eingesetzt werden. Besonders bevorzugt zur Anwendung gelangende Mischungen dieser Olefine enthalten 35 bis 45 Mol% 2,4,4'-Trimethylpenten-1 und 5 bis 15 Mol% 2,4,4'-Trimethylpenten-2. Terpolymere, die Trimethylpentene mit Maleinsäureanhydrid einpolymerisiert enthalten, sind beispielsweise aus der EP-A-00 09 169 und der EP-A-00 09 170 bekannt. Die genannten Olefine mit 4 bis 28 Kohlenstoffatomen können gegebenenfalls auch in Mischung mit C₁- bis C₂₈-Alkylvinylethern, z.B. Methylvinylether, Ethylvinylether, n-Propylvinylether oder Isobutylvinylether copolymerisiert werden. Der Anteil der Alkylvinylether in der Mischung mit mindestens einem der in Betracht kommenden Olefine beträgt dabei bis zu 30 Mol%. Beispielsweise kann man als Komponente (a) Mischungen aus 80 Mol% Diisobutylen und 20 Mol% Methylvinylether einsetzen.

Als Komponente (b) zur Herstellung der Copolymerisate eignen sich monoethylenisch ungesättigte Dicarbonsäureanhydride mit 4 bis 8 C-Atomen, z.B. Maleinsäureanhydrid, Itaconsäureanhydrid, Mesaconsäureanhydrid, Citraconsäureanhydrid und Methylenmalonsäureanhydrid. Von den genannten Anhydriden werden Maleinsäureanhydrid und Itaconsäureanhydrid bevorzugt eingesetzt, wobei Maleinsäureanhydrid in der Praxis von besonderer Bedeutung ist. Bei der Copolymerisation der Monomeren gemäß (a) und (b) entstehen bevorzugt alternierende Copolymerisate, die die genannten Monomeren im Molverhältnis 1:1 einpolymerisiert enthalten. Die K-Werte der Copolymerisate betragen 6 bis 100, vorzugsweise 8 bis 40 (gemessen nach H. Fikentscher bei 25°C in Tetrahydrofuran und einer Polymerkonzentration von 1 Gew.-%). Die Copolymerisation der Monomeren (a) und (b) wird nach bekannten Verfahren durchgeführt, z.B. in polaren, gegenüber den Säureanhydriden inerten Lösemitteln, wie Aceton, Tetrahydrofuran oder Dioxan als Lösungspolymerisation, in Toluol, Xylol oder aliphatischen Kohlenwasserstoffen in Form einer Fällungspolymerisation oder auch durch Massepolymerisation der Komponenten (a) und (b), wobei es vorteilhaft ist, einen Überschuß an Monomeren der Komponente (a) als Verdünnungsmedium zu wählen. Die Polymerisation wird bei allen Verfahren mit Hilfe von Polymerisationsinitiatoren ausgelöst. Als Polymerisationsinitiatoren kommen dabei sämtliche in Radikale zerfallende Verbindungen in Betracht, z.B. Peroxide, Hydroperoxide, Redoxinitiatoren und Azoverbindungen. Die so erhältlichen Copolymerisate werden anschließend partiell verestert und hydrolysiert, so daß die Anhydridgruppen in Carboxylgruppen umgewandelt werden. Es ist auch möglich, die Anhydridgruppen enthaltenden Copolymerisate zunächst zu hydrolisieren, daß sämtliche Anhydridgruppen als Carboxylgruppen vorliegen und dann die Veresterung nach bekannten Methoden durchzuführen. Bevorzugt ist jedoch eine Arbeitsweise, bei der man zunächst die Carbonsäureanhydridgruppen des Copolymerisates partiell mit den Umsetzungsprodukten von (A) und (B) verestert.

Geeignete Verbindungen (A) sind C₁- bis C₃₀-Alkohole, z.B. Methanol, Ethanol, n-Propanol, Isopropanol, n-Butanol, Isobutanol, tert.-Butanol, Pentanol, Cyclohexanol, n-Hexanol, n-Octanol, 2-Ethylhexanol, Decanol, Dodecanol und Stearylalkohol. Besondere technische Bedeutung haben die nach dem Oxoverfahren hergestellten Alkohole, z.B. C₁₀-Alkohole, C₁₃-Alkohole und C₁₃/C₁₅-Alkohole, z.B. C₁₀-Alkohole, C₁₃-Alkohole und C₁₃-Talgfettalkohole. Bei diesen nach dem Oxoverfahren hergestellten Alkohole und den nativen Alkoholen handelt es sich in aller Regel um Mischungen mehrerer Alkohole.

Geeignete Verbindungen (A) sind außerdem C₈- bis C₂₂-Fettsäuren, z.B. Stearinsäure, Palmitinsäure, Cocosfettsäure, Talgfettsäure, Laurinsäure und Behensäure. Als Komponente (A) kommen außerdem C₁- bis C₁₂-Alkylphenole in Betracht, z.B. n-Decylphenol, n-Nonylphenol, Isononylphenol, n-Octyphenol, Isobutylphenol und Methylphenol. Als Komponente (A) werden ferner sekundäre C₂- bis C₃₀-Amine eingesetzt, z.B. Dimethylamin, Di-n-butylamin, Di-n-octylamin und Di-stearylamin. Vorzugsweise verwendet man sekundäre C₈- bis C₁₈-Fettamine. Bevorzugt als Komponente (A) werden C₁- bis C₃₀-Alkohole oder sek.-C₂- bis C₁₈-Amine eingesetzt.

Als Komponente (B) eignen sich C₂- bis C₄-Alkylenoxide, z.B. Ethylenoxid, Propylenoxid, n-Butylenoxid und Isobutylenoxid. Außerdem kommt Tetrahydrofuran als Komponente (B) in Betracht. Bevorzugt zum Einsatz gelangende Verbindungen (B) sind Ethylenoxid und Propylenoxid. Ethylenoxid und Propylenoxid können entweder allein an die unter (A) angegebenene Verbindungen angelagert werden oder in Form eines Mischgases unter Bildung von statistisch aufgebauten Ethylenoxid- und Proyplenoxideinheiten enthaltenden Addukten oder auch in der Weise, daß man an die unter (A) genannten Verbindungen zunächst Ethylenoxid und danach Propylenoxid anlagert oder die Reihenfolge umkehrt oder auch zunächst Ethylenoxid und danach Propylenoxid anlagert oder die Reihenfolge umkehrt oder auch zunächst Ethylenoxid, dann Propylenoxid und wiederum Ethylenoxid an die Verbindungen (A) anlagert, so daß Blockcopolymerisate entstehen. Verfahren zur Alkoxylierung der Verbindungen (A) gehören zum Stand der Technik.

Die Verbindungen (A) werden mit den Verbindungen (B) in einem Molverhältnis von (A) zu (B) von 1:2 bis 1:200, vorzugsweise 1:3 bis 1:100 umgesetzt. Bei dieser Reaktion entstehen in allen Fällen Umsetzungsprodukte, bei denen mindestens eine Endgruppe eine OH-Gruppe ist. Die so hergestellten Umsetzungsprodukte aus(A) und (B) werden mit den oben beschriebenen Copolymerisaten aus den Monomeren (a) und (b) zur Reaktion gebracht, wobei partiell veresterte Copolymerisate entstehen. Diese Umsetzung kann in Gegenwart von gegenüber Carbonsäureanhydridgruppen inerten Lösungsmitteln, z.B. Aceton oder Tetrahydrofuran, durchgeführt werden und wird vorzugsweise in Masse durchgeführt, d.h. die Olefin-Dicarbonsäureanhydridgruppen enthaltenden Copolymerisate werden direkt mit den Umsetzungsprodukten von (A) und (B) zur Reaktion gebracht. Die Mengen werden dabei so gewählt, daß nur eine partielle Veresterung der Anhydridgruppen eintritt. Bezogen auf das hydrolysierte partiell veresterte Polymerisat sind 1 bis 50, vorzugsweise 5 bis 30 % der Carboxylgruppen verestert. Die Veresterung selbst wird in aller Regel bei höheren Temperaturen, z.B. 50 bis 200, vorzugsweise 80 bis 150°C in Gegenwart üblicher Veresterungskatalysatoren vorgenommen. Besonders geeeignet als Katalysator ist p-Toluolsulfonsäure. Die Veresterungsreaktion ist nach etwa 0,5 bis 20, vorzugsweise 1 bis 10 Stunden beendet. Lösemittel für die Veresterungsreaktion, sofern sie überhaupt eingesetzt werden, sind alle diejenigen organischen Flüssigkeiten, die gegenüber den Anhydridgruppen inert sind und die sowohl die Ausgangsstoffe als auch die partiell veresterten Copolymerisate lösen oder quellen, z.B. Toluol, Xylol, Ethylbenzol, aliphatische Kohlenwasserstoffe und Ketone, wie Aceton und Methylethylketon. Nach der partiellen Veresterung werden die Lösemittel - sofern sie verwendet werden - aus dem Reaktionsgemisch entfernt, z.B. durch Abdestillieren und die verbleibenden partiell veresterten Copolymerisate in Wasser unter Zusatz von Alkalien gelöst. Hierbei werden die noch in Copolymerisaten vorhandenen Anhydridgruppen hydrolysiert. Geeignete Alkalien sind beispielsweise Natronlauge, Kalilauge, Ammoniak, Amine und Alkanolamine.

Der pH-Wert der so erhaltenen wäßrigen partiell veresterten Copolymerisat-Lösungen beträgt 4 bis 10 und liegt vorzugsweise in dem Bereich von 6 bis 8.

Die erfindungsgemäß zu verwendenden partiell veresterten Copolymerisate sind beispielsweise auch dadurch erhältlich, daß man Mono- und Diester, die sich von C₁- bis C₃-Alkoholen ableiten, der monoethylenisch ungesättigten Dicarbonsäuren (Komponente (b)) mit den oben beschriebenen Umsetzungsprodukten von (A) und (B) partiell umestert und die umgeesterten Produkte dann mit mindestens einem C₄- bis C₂₈-Olefin oder Mischungen aus mindestens einem C₄- bis C₂₈- Olefin mit bis 20 Mol% C₁- bis C₄- Alkylvinylethern copolymerisiert. Die Reaktion der Mono- und Diester der monoethylenisch ungesättigten Dicarbonsäuren mit den Umsetzungsprodukten aus (A) und (B) wird nur bis zu einem Maße vorgenommen, daß 1 bis 50 % der Estergruppen, die sich von einem C₁- bis C₃-Alkohol ableiten, reagieren. Nach der Copolymerisation erfolgt die Umsetzung mit Alkali, Ammoniak und/oder Alkanolaminen zu den wasserlöslichen Salzen, wobei mindestens eine teilweise Hydrolyse der Ausgangsmono- oder Diester von C₁- bis C₃-Alkoholen eintritt. Die partielle Veresterung von Anhydridgruppen enthaltenden alternierenden Copolymerisaten aus (a) und (b) mit den Umsetzungsprodukten von (A) und (B) ist jedoch in jedem Falle bevorzugt.

Die erfindungsgemäß zu verwendenden Copolymerisate sind auch erhältlich durch Copolymerisieren von
(a) mindestens einem C₄- bis C₂₈-Olefin oder Mischungen aus mindestens einem C₄- bis C₂₈-Olefin mit bis zu 20 Mol% C₁- bis C₂₈-Alkylvinylethern und
(b) den Reaktionsprodukten aus (b1) ethylenisch ungesättigten Dicarbonsäureanhydriden mit 4 bis 8 C-Atomen und (b2) den Umsetzungsprodukten aus
   (A) C₁- bis C₃₀-Alkoholen, C₈- bis C₂₂-Fettsäuren, C₁- bis C₁₂-Alkylphenolen oder sekundären C₂- bis C₃₀-Aminen mit
   (B) mindestens einem C₂- bis C₄-Alkylenoxid oder Tetrahydrofuran
im Molverhältnis (A):(B) von 1:2 bis 1:200, so daß 1 bis 50 % der Anhydridgruppen verestert sind, im Molverhältnis (a):(b) von 1:0,5 bis 2 zu Copolymerisaten mit K-Werten von 6 bis 100 und Hydrolyse der nicht umgesetzten Anhydridgruppen der Copolymerisate zu Carboxylgruppen oder deren Salze.

Die erfindungsgemäß zu verwendenden partiell veresterten Copolymerisate können in Form der freien Säuren und in partiell oder vollständig neutralisierter Form vorliegen und jeweils in einer dieser Formen als Dispergiermittel eingesetzt werden.

Die als Dispergiermittel zu verwendenden Copolymerisate eignen sich zur Herstellung wäßriger Anschlämmungen von beliebigen Pigmenten. Es können sowohl organische als auch anorganische Pigmente in wäßrigem Medium damit dispergiert werden. Die Dispergiermittel bewirken dabei eine Herabsetzung der Viskosität der wäßrigen Pigmentanschlämmungen und erlauben die Herstellung hochkonzentrierter wäßriger Slurries. Von technischem Interesse sind besonders solche Pigmentslurries, die einen Feststoffgehalt von mindestens 40 Gew.-% haben.

Die erfindungsgemäß zu verwendenden Copolymerisate werden besonders vorteilhaft zum Dispergieren von anorganischen Pigmenten eingesetzt und wirken dabei als Verflüssiger in konzentrierten wäßrigen Pigmentanschlämmungen. Sie eignen sich beispielsweise für folgende Pigmente: keramische Werkstoffe wie die in der Natur weit verbreiteten Tone, Kaoline, Feldspäte und Quarzgesteine, hydraulische Bindemittel wie Zement und Gipshalbhydrat(Anhydrit), Calciumcarbonat, Kreide, Titandioxid, Gipsdihydrat und Eisenoxide wie FeO(OH), Fe₂O₃ und Fe₃O₄. In Abhängigkeit von der Teilchengröße und der chemischen Natur der Pigmente kann man wäßrige Pigmentsuspensionen herstellen, deren maximale Feststoffgehalte unterschiedlich hoch sind. Die erfindungsgemäß zu verwendenden Copolymerisate werden in Mengen von 0,05 bis 10, vorzugsweise 0,1 bis 1 Gew.-%, bezogen auf die wäßrige Pigmentsuspension, eingesetzt. Sie erlauben beispielsweise die Herstellung von wäßrigen Suspensionen von keramischen Massen, Gipshalbhydrat oder Gipsdihydrat mit Feststoffkonzentrationen von 65-75 Gew.-%. Bei wäßrigen Anschlämmungen von Kreide und Titandioxid erreicht man Feststoffgehalte von 70 - 85 Gew.-%, während Eisenoxide in den meisten Fällen zu Pigmentsuspensionen mit einer Feststoffkonzentration bis zu 70 Gew.-% verarbeitet werden können.

Die Herstellung der wäßrigen Pigmentsuspensionen kann beispielsweise in der Weise erfolgen, daß man eine wäßrige Lösung des als Verflüssiger wirkenden erfindungsgemäß zu verwendenden Copolymerisats vorlegt und das feinteilige Pigment unter Rühren zugibt. Von besonderem praktischem Interesse ist dagegen die kontinuierliche Herstellung von Slurries. Hierbei geht man so vor, daß man eine wäßrige Pigmentsuspension vorlegt und gleichzeitig Wasser, Dispergiermittel und Pigment unter Durchmischen kontinuierlich zuführt und in einer oder mehreren nachfolgenden Mischstationen für eine Homogenisierung der wäßrigen Pigmentsuspensionen sorgt. Man erhält auf diese Weise wäßrige Pigmentanschlämmungen, die eine Viskosität in dem Bereich von 100 bis 1000 mPas (gemessen in einem Brookfield-Viskosimeter bei 60 Umdrehungen und 20°C, Spindel 3 aufweisen). Die wäßrigen Pigmentsuspensionen sind in vielen Fällen thixotrop. Der mittlere Teilchendurchmesser der Pigmente liegt beispielsweise in dem Bereich von 0,1 - 20 µm.

Gegenstand der Erfindung sind außerdem wäßrige Pigmentsuspensionen, die 0,05 - 10 Gew.-% partiell veresterte, Carboxylgruppen aufweisende Copolymerisate oder Salze dieser partiell veresterten Copolymerisate enthalten, die herstellbar sind durch Copolymerisieren von
(a) mindestens einem C₄- bis C₂₈-Olefin oder Mischungen aus mindestens einem C₄- bis C₂₈-Olefin mit bis zu 20 Mol% C₁- bis C₂₈-Alkylvinylethern und
(b) ethylenisch ungesättigten Dicarbonsäureanhydriden mit 4 bis 8 C-Atomen
im Molverhältnis 1:0,5 bis 2 zu Copolymerisaten mit K-Werten von 6 bis 100 (bestimmt nach H. Fikentscher in Tetrahydrofuran bei 25°C und einer Polymerkonzentration von 1 Gew.-%) und anschließende partielle Veresterung der Copolymerisate mit Umsetzungsprodukten von
(A) C₁- bis C₃₀-Alkoholen, C₈- bis C₂₂-Fettsäuren, C₁- bis C₁₂-Alkylphenolen, sekundären C₂- bis C₃₀-Aminen oder deren Mischungen mit
(B) mindestens einem C₂- bis C₄-Alkylenoxid oder Tetrahydrofuran
im Molverhältnis (A):(B) von 1:2 bis 1:200 und Hydrolyse der nicht umgesetzten Anhydridgruppen der Copolymerisate zu Carboxylgruppen, wobei die partielle Veresterung so weit geführt wird, daß 1 bis 50 % der Carboxylgruppen der Copolymerisate verestert sind.

Die hochkonzentrierten wäßrigen Pigmentsuspensionen können verschiedenen Anwendungen zugeführt werden, z.B. werden keramische Massen zur Herstellung von Sanitärartikeln verwendet, hydraulische Bindemittel finden Anwendung im Bauwesen, während Anschlämmungen von Carbonat, Kreide und Titandioxid als Bestandteil von Papierstreichmassen verwendet werden.

Die in den Beispielen enthaltenen Angaben in % sind Gew.-%. Die K-Werte wurden nach H. Fikentscher, Cellulose-Chemie, Band 13, 48-64 und 71-74 (1932) in Tetrahydrofuran bei 25°C und einer Polymerkonzentration von 1 Gew.-% bestimmt.

### Dispergiermittel A

Dieses Dispergiermittel wurde gemäß den Angaben in Beispiel 2 der EP-A-0 367 049 durch Veresterung eines alternierenden Copolymerisates aus Maleinsäureanhydrid und Diisobuten mit 10 Mol-% (bezogen auf die Carboxylgruppen des Copolymerisats) eines Anlagerungsprodukts von 50 Mol Ethylenoxyd an 1 Mol eines C₁₆/C₁₈-Fettalkoholgemisches. Das so erhältliche Dispergiermittel hatte einen K-Wert von 11,5.

### Dispergiermittel B (gemäß Stand der Technik)

Handelsübliches Naphthalinsulfonsäure-Formaldehyd-Kondensat.

### Dispergiermittel C

Handelsübliches Ligninsulfonat.

Die oben beschriebenen Dispergiermittel wurden gemäß der im folgenden beschriebenen Arbeitsmethode bezüglich ihrer verflüssigenden Wirkung getestet.

### Herstellung der Slurries

Die in der Tabelle angegebenen Anwendungskonzentrationen an Dispergiermittel wurden jeweils in Form einer wäßrigen Lösung in einem Topf aus Stahl vorgelegt. Durch Zugabe von Gipshalbhydrat wurde dann in allen Fällen eine 67 %ige wäßrige Pigmentsuspension hergestellt. Die Suspensionen wurden nach folgendem Test geprüft.

### Testmethode:

Der Slurry wird jeweils in einem Stahltopf mit einem Spatel bis zur Homogenität angerührt und danach in ein Glasrohr dekantiert, das eine Höhe von 100 mm und einen Durchmesser von 36 mm hat und an einem Ende gummiert ist. Das Glasrohr wird so in ein Stativ eingespannt, daß das gummierte Ende mit einer Glasplatte gehalten wird, die auf einer hydraulischen Hebebühne aufliegt. Nach einer Verweilzeit von 15 Sekunden wird die Glasplatte hydraulisch gesenkt. Der Slurry soll dabei gleichmäßig auf der Platte verlaufen. Bei Beginn des Absenkens der Glasplatte wird eine Stoppuhr in Gang gesetzt. In den ausgelaufenen Slurry taucht man 4 Holzstäbchen ein und zieht nach jeweils 5 Minuten 1 Stäbchen heraus, um die Aushärtung der Masse zu beurteilen.

Nach 24 Stunden wird der ausgelaufene Slurry nochmals auf Aushärtung untersucht. Er wird außerdem optisch bemustert und fotokopiert. Anhand der Fotokopien des Slurry-Kuchens wird die Fläche der Slurry-Kuchen bestimmt. Je größer die Fläche, desto höher ist die verflüssigende Wirkung des jeweils eingesetzten Dispergiermittels. Mit den oben angegebenen Dispergiermitteln wurden folgende Ergebnisse erhalten.

**Tabelle**

| Beispiel | Dispergiermittel | Konzentration des Dispergiermittels im Slurry [%] | Fläche des Slurry auf der Glasplatte [cm²] |
|---|---|---|---|
| 1 | A | 0,2 | 86,6 |
| 2 | A | 0,4 | 206,1 |
| 3 | A | 0,6 | 246,1 |

| Vergleichsbeispiel | | | |
|---|---|---|---|
| 1 | B | 0,6 | 138,9 |
| 2 | C | 0,2 | 165,1 |
| 3 | C | 0,4 | 165,1 |
| 4 | C | 0,6 | 188,7 |

## Patentansprüche

1. Verwendung von partiell veresterten Copolymerisaten, die erhältlich sind durch Copolymerisieren von
(a) mindestens einem C₄- bis C₂₈-Olefin oder Mischungen aus mindestens einem C₄- bis C₂₈-Olefin mit bis zu 20 Mol% C₁- bis C₂₈-Alkylvinylethern und
(b) ethylenisch ungesättigten Dicarbonsäureanhydriden mit 4 bis 8 C-Atomen
im Molverhältnis 1:0,5 bis 2 zu Copolymerisaten mit K-Werten von
6 bis 100, bestimmt nach H. Fikentscher in Tetrahydrofuran bei 25°C und einer Polymerkonzentration von 1 Gew.-%, und anschließende partielle Veresterung der Copolymerisate mit Umsetzungsprodukten von
(A) C₁- bis C₃₀-Alkoholen, C₈- bis C₂₂-Fettsäuren, C₁- bis C₁₂-Alkylphenolen, sekundären C₂- bis C₃₀-Aminen oder deren Mischungen mit
(B) mindestens einem C₂- bis C₄-Alkylenoxid oder Tetrahydrofuran
im Molverhältnis (A):(B) von 1:2 bis 1:200 und Hydrolyse der nicht umgesetzten Anhydridgruppen der Copolymerisate zu Carboxylgruppen, wobei die partielle Veresterung der Copolymerisate so weit geführt wird, daß 1 bis 50 % der Carboxylgruppen der Copolymerisate verestert sind, oder von Salzen dieser partiell veresterten Copolymerisate, als Dispergiermittel für wäßrige Pigmentsuspensionen.

2. Verwendung nach Anspruch 1, dadurch gekennzeichnet, daß zur Herstellung der partiell veresterten Copolymerisate zunächst
(a) verzweigte C₆- bis C₁₈-Olefine oder deren Gemische und
(b) Maleinsäureanhydrid oder Itaconsäureanhydrid copolymerisiert werden und anschließend die so hergestellten Copolymerisate mit Umsetzungsprodukten von
(A) C₁- bis C₃₀-Alkoholen, C₈- bis C₁₈-Fettsäuren, C₁- bis C₁₂-Alkylphenolen oder sekundären C₂- bis C₃₀-Aminen mit
(B) Ethylenoxid und/oder Propylenoxid
im Molverhältnis (A):(B) von 1:2 bis 1:200 partiell verestert und die nicht umgesetzten Anhydridgruppen der Copolymerisate zu Carboxylgruppen hydrolysiert werden, wobei die partielle Veresterung der Copolymerisate so weit geführt wird, daß 5 bis 30 % der Carboxylgruppen der Copolymerisate verestert sind.

3. Verwendung nach Anspruch 1 oder 2, dadurch gekennzeichnet, daß zur Herstellung der partiell veresterten Copolymerisate als Komponente
(a) Mischungen aus 2,4,4'-Trimethylpenten-1 und 2,4,4'-Trimethylpenten-2 und als Komponente
(b) Maleinsäureanhydrid
eingesetzt werden.

4. Verwendung nach einem der Ansprüche 1 bis 3, dadurch gekennzeichnet, daß zur Herstellung der partiell veresterten Copolymerisate die partielle Veresterung mit Umsetzungsprodukten von
(A) C₁- bis C₃₀-Alkoholen oder sekundären C₂- bis C₃₀-Aminen mit
(B) Ethylenoxid oder Ethylenoxid und Propylenoxid
vorgenommen wird.

5. Wäßrige Pigmentsuspensionen, dadurch gekennzeichnet, daß sie 0,05 bis 10 Gew.-% partiell veresterte Copolymerisate oder Salze dieser partiell veresterten Copolymerisate enthalten, die erhältlich sind durch Copolymerisieren von
(a) mindestens einem C₄- bis C₂₈-Olefin oder Mischungen aus mindestens einem C₄- bis C₂₈-Olefin mit bis zu 20 Mol% C₁- bis C₂₈-Alkylvinylethern und
(b) ethylenisch ungesättigten Dicarbonsäureanhydriden mit 4 bis 8 C-Atomen
im Molverhältnis 1:0,5-2 zu Copolymerisaten mit K-Werten von 6 bis 100, bestimmt nach H. Fikentscher in Tetrahydrofuran bei 25°C und einer Polymerkonzentration von 1 Gew.-%, und anschließende partielle Veresterung der Copolymerisate mit Umsetzungsprodukten von
(A) C₁- bis C₃₀-Alkoholen, C₈- bis C₂₂-Fettsäuren, C₁- bis C₁₂-Alkylphenolen, sekundären C₂- bis C₃₀-Aminen oder deren Mischungen mit
(B) mindestens einem C₂- bis C₄-Alkylenoxid oder Tetrahydrofuran
im Molverhältnis (A):(B) von 1:2 bis 1:200, und Hydrolyse der nicht umgesetzten Anhydridgruppen der Copolymerisate zu Carboxylgruppen, wobei die partielle Veresterung der Copolymerisate so weit geführt wird, daß 1 bis 50 % der Carboxylgruppen verestert sind.

## Claims

1. The use of partially esterified copolymers obtainable by copolymerizing
(a) at least one C₄- to C₂₈-olefin or mixtures of at least one C₄- to C₂₈-olefin with up to 20 mol% of C₁- to C₂₈-alkyl vinyl ethers, and
(b) ethylenically unsaturated dicarboxylic anhydrides having from 4 to 8 carbon atoms
in a molar ratio of from 1:0.5 to 1:2 to give copolymers having K values from 6 to 100, determined by the method of H. Fikentscher in tetrahydrofuran at 25°C and a polymer concentration of 1% by weight, and subsequent partial esterification of the copolymers with reaction products of
(A) C₁- to C₃₀-alcohols, C₈- to C₂₂-fatty acids, C₁- to C₁₂-alkylphenols, secondary C₂- to C₃₀-amines or mixtures thereof, with
(B) at least one C₂- to C₄-alkylene oxide or tetrahydrofuran
in a molar ratio of (A):(B) of from 1:2 to 1:200 and hydrolysis of the unconverted anhydride groups of the copolymers to carboxyl groups, the partial esterification of the copolymers being carried on until from 1 to 50% of the carboxyl groups of the copolymers have been esterified, or of salts of these partially esterified copolymers, as dispersants for aqueous pigment suspensions.

2. A use as claimed in claim 1, wherefor the partially esterified copolymers are prepared by first copolymerizing
(a) branched C₆- to C₁₈-olefins or mixtures thereof, and
(b) maleic anhydride or itaconic anhydride, and then partially esterifying the resulting copolymers with reaction products of
(A) C₁- to C₃₀-alcohols, C₈- to C₁₈-fatty acids, C₁- to C₁₂-alkylphenols, or secondary C₂- to C₃₀-amines with
(B) ethylene oxide and/or propylene oxide
in a molar ratio of (A):(B) of from 1:2 to 1:200, and hydrolyzing the unconverted anhydride groups of the copolymers to carboxyl groups, the partial esterification of the copolymers being carried on until from 5 to 30% of the carboxyl groups of the copolymers have been esterified.

3. A use as claimed in claim 1 or 2, wherefor the partially esterified copolymers are prepared using as component
(a) mixtures of 2,4,4'-trimethyl-1-pentene and 2,4,4'-trimethyl-2-pentene, and as component
(b) maleic anhydride.

4. A use as claimed in any of claims 1 to 3, wherefor the partially esterified copolymers are prepared by partial esterification with reaction products of
(A) C₁- to C₃₀-alcohols or secondary C₂- to C₃₀-amines, with
(B) ethylene oxide or ethylene oxide and propylene oxide.

5. Aqueous pigment suspensions comprising from 0.05 to 10% by weight of partially esterified copolymers, or salts of these partially esterified copolymers, obtainable by copolymerizing
(a) at least one C₄- to C₂₈-olefin or mixtures of at least one C₄- to C₂₈-olefin with up to 20 mol% of C₁- to C₂₈-alkyl vinyl ethers, and
(b) ethylenically unsaturated dicarboxylic anhydrides having from 4 to 8 carbon atoms
in a molar ratio of from 1:0.5 to 1:2 to give copolymers having K values from 6 to 100, determined by the method of H. Fikentscher in tetrahydrofuran at 25°C and a polymer concentration of 1% by weight, and subsequent partial esterification of the copolymers with reaction products of
(A) C₁- to C₃₀-alcohols, C₈- to C₂₂-fatty acids, C₁- to C₁₂-alkylphenols, secondary C₂- to C₃₀-amines or mixtures thereof with
(B) at least one C₂- to C₄-alkylene oxide or tetrahydrofuran
in a molar ratio of (A):(B) of from 1:2 to 1:200 and hydrolysis of the unconverted anhydride groups of the copolymers to carboxyl groups, the partial esterification of the copolymers being carried on until from 1 to 50% of the carboxyl groups have been esterified.

## Revendications

1. Utilisation de copolymères partiellement estérifiés, que l'on peut obtenir par la copolymérisation
(a) d'au moins une oléfine en C₄ à C₂₈ ou de mélanges d'au moins une oléfine en C₄ à C₂₈ avec jusqu'à 20% molaires d'éthers alkyl(C₁-C₂₈)vinyliques et
(b) d'anhydrides d'acides dicarboxyliques à insaturation éthylénique, comportant de 4 à 8 atomes,
dans le rapport molaire 1:0,5 à 2 en copolymères avec des valeurs K de
6 à 100, telles que déterminées selon H. Fikentscher dans le tétrahydrofuranne, à 25°C et une concentration en polymère de 1% en poids, et estérification partielle subséquente des copolymères avec des produits de réaction
(A) d'alcools en C₁ à C₃₀, d'acides gras en C₈ à C₂₂, d'alkyl(C₁-C₁₂)phénols, d'amines secondaires en C₂ à C₃₀, ou de leurs mélanges, avec
(B) au moins un oxyde d'alkylène en C₂ à C₄, ou le tétrahydrofuranne,
dans le rapport molaire (A):(B) de 1:2 à 1:200 et l'hydrolyse des groupes anhydrides non entrés en réaction des copolymères en radicaux carboxyle, où l'estérification partielle des copolymères est poussée jusqu'au point où 1 à 50% des radicaux carboxyle des copolymères sont estérifiés, ou de sels de ces copolymères partiellement estérifiés, à titre d'agents dispersifs pour des dispersions aqueuses de pigments.

2. Utilisation suivant la revendication 1, caractérisée en ce qu'en vue de la préparation des copolymères partiellement estérifiés, on copolymérise d'abord
(a) des oléfines ramifiées en C₆ à C₁₈, ou leurs mélanges et
(b) de l'anhydride de l'acide maléique ou de l'anhydride de l'acide itaconique et on estérifie ensuite partiellement les copolymères ainsi préparés avec des produits de réaction
(A) d'alcools en C₁ à C₃₀, d'acides gras en C₈ à C₁₈, d'alkylphénols en C₁ à C₁₂, ou d'amines secondaires en C₂ à C₃₀ avec
(B) l'oxyde d'éthylène et/ou l'oxyde de propylène,
dans le rapport molaire (A):(B) de 1:2 à 1:200 et on hydrolyse les radicaux anhydride non entrés en réaction des copolymères en radicaux carboxyle, où l'on pousse l'estérification partielle des copolymères en une manière telle que de 5 à 30% des radicaux carboxyle des copolymères sont estérifiés.

3. Utilisation suivant la revendication 1 ou 2, caractérisée en ce qu'en vue de la préparation des copolymères partiellement estérifiés, on met en oeuvre, à titre de composant,
(a) des mélanges du 2,4,4'-triméthylpentène-1 et du 2,4,4'-triméthylpentène-2 et, à titre de composant,
(b) l'anhydride de l'acide maléique.

4. Utilisation suivant l'une quelconque des revendications 1 à 3, caractérisé en ce qu'en vue de la préparation des copolymères partiellement estérifiés, on entreprend l'estérification partielle avec des produits de réaction
(A) d'alcools en C₁ à C₃₀, ou d'amines secondaires en C₂ à C₃₀, avec
(B) l'oxyde d'éthylène ou l'oxyde d'éthylène et l'oxyde de propylène.

5. Suspensions aqueuses de pigments, caractérisées en ce qu'elles contiennent 0,05 à 10% en poids de copolymères partiellement estérifiés, ou de sels de ces copolymères partiellement estérifiés, que l'on peut obtenir par la copolymérisation
(a) d'au moins une oléfine en C₄ à C₂₈, ou de mélanges d'au moins une oléfine en C₄ à C₂₈ avec jusqu'à 20% molaires d'éthers alkyl(C₁-C₂₈)vinyliques et
(b) d'anhydrides d'acides dicarboxyliques à insaturation oléfinique, comportant de 4 à 8 atomes,
dans le rapport molaire de 1:0,5-2, en copolymères possédant des valeurs K de 6 à 100, comme déterminées selon H. Fikentscher dans le tétrahydrofuranne à 25°C et une concentration en polymère de 1% en poids, et l'estérification partielle subséquente des copolymères avec des produits de réaction
(A) d'alcools en C₁ à C₃₀, d'acides gras en C₈ à C₂₂, d'alkyl(C₁-C₁₂)phénols, d'amines secondaires en C₂ à C₃₀, ou de leurs mélanges, avec
(B) au moins un oxyde d'alkylène en C₂ à C₄, ou le tétrahydrofuranne,
dans le rapport molaire (A):(B) de 1:2 à 1:200 et l'hydrolyse des radicaux anhydride non entrés en réaction des copolymères en radicaux carboxyle, où on pousse l'estérification partielle des copolymères en une manière telle que 1 à 50% des radicaux carboxyle soient estérifiés.
